# EUROPEAN PATENT APPLICATION

(11) **EP 1 405 815 A1**
(43) Date of publication of application: **07.04.2004**
(21) Application number: 01947962.5
(22) Date of filing: 10.07.2001
(51) Int. Cl.: B66B 11/08, F16D 65/09

(54) **ELEVATOR HOIST**

(71) Applicant: MITSUBISHI DENKI KABUSHIKI KAISHA, Tokyo 100-8310 (JP)
(72) Inventor: YAMASAKI, Shinji Mitsubishi Denki Kabushiki Kaisha, Chiyoda-ku, Tokyo 100-8310 (JP); INOUE, Kenji Mitsubishi Denki Kabushiki Kaisha, Chiyoda-ku, Tokyo 100-8310 (JP); URAKAWA, Hidehiko Mitsubishi Denki Kabushiki Kaisa, Chiyoda-ku, Tokyo 100-8310 (JP); IIDA, Yasumasa Mitsubishi Electric Engineer.Co.Ltd, Chiyoda-ku, Tokyo 100-0004 (JP)
(74) Representative: HOFFMANN EITLE
(86) International application number: PCT/JP2001/005984
(87) International publication number: WO 2003/008320

(57) **Abstract**

In an elevator hoist, one end portion of a main shaft is supported by the bottom portion of a case. The other end portion of the main shaft is supported by a brake support plate supporting a brake device. The brake support plate is provided with a support hole into which the other end portion of the main shaft is inserted. The brake support plate also serves as a cover for closing the entire opening of the case. The brake support plate is provided with a step portion to be fit-engaged with the peripheral edge portion of the opening. The step portion is provided so as to extend at least a part of a circumference having the support hole as its center.

## Description

### TECHNICAL FIELD

This invention relates to an elevator hoist having a drive sheave portion around which a main rope is wrapped, a drive motor for rotating the drive sheave portion, and a brake device for braking the rotation of the drive sheave portion.

### BACKGROUND ART

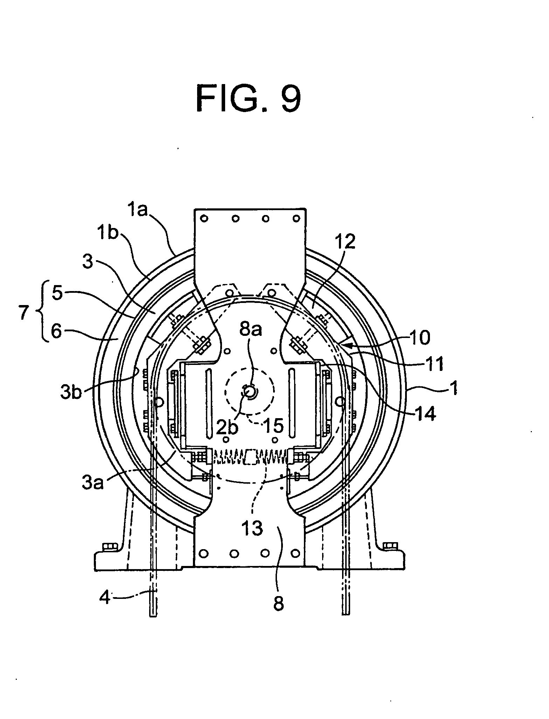

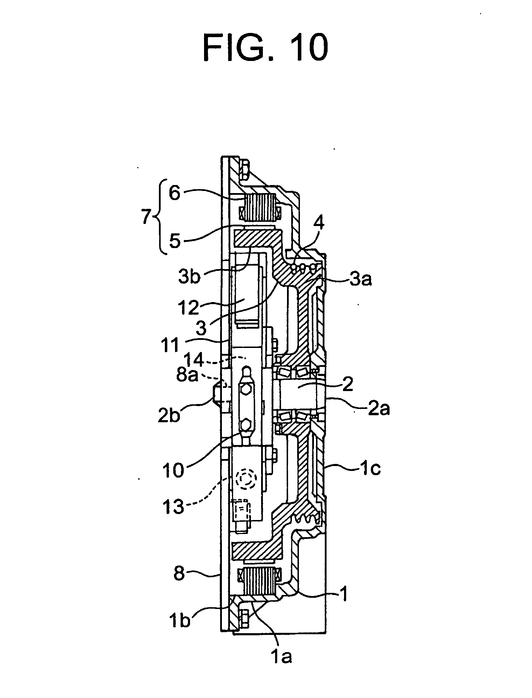

Fig. 9 is a front view showing a conventional elevator hoist disclosed, for example, in Japanese Patent Application Laid-open No. 2000-289954, and Fig. 10 is a side view, partially in section, showing the inner structure of the hoist of Fig. 9.

In the drawings, a metal case 1 has a cylindrical portion 1a, an opening 1b provided at one axial end of the cylindrical portion, and a bottom portion 1c provided at the other axial end of the cylindrical portion 1a. At the bottom portion 1c, one end portion 2a of a main shaft 2 extending in the axial direction of the cylindrical portion 1a (from side to side in Fig. 10) is supported.

The case 1 contains a rotating body 3 rotatable around the main shaft 2. The rotating body 3 has a drive sheave portion 3a and a cylindrical drum portion 3b formed integrally with the drive sheave portion 3a. A plurality of main ropes 4 are wrapped around the outer peripheral portion of the drive sheave portion 3a.

An armature 5 is mounted on the outer peripheral surface of the drum portion 3b. Fixed to the inner peripheral surface of the cylindrical portion 1a is a stator winding 6 opposed to the armature 5. A driving motor 7 for rotating the rotating member 3 has the armature 5 and the stator winding 6. Mounted on the main shaft 2 is an encoder 15 for detecting the rotating speed of the rotating body 3.

A brake support plate 8 is mounted to one end portion of the cylindrical portion 1a. The brake support plate 8 is equipped with a support hole 8a into which the other end portion 2b of the main shaft 2 is inserted. Further, mounted on the brake support plate 8 is a brake device 10 for braking the rotation of the rotating body 3.

The brake device 10 has a pair of rockable brake arms 11, a pair of brake shoes 12 mounted on the brake arms 11 and adapted to move toward and away from the inner peripheral surface of the drum portion 3b by the rocking of the brake arms 11, a pair of springs 13 for urging the brake arms 11 in such a direction that the brake shoes 12 may come into contact with the drum portion 3b, and a pair of electromagnet mechanisms 14 for causing the brake arms 11 to rock in such a direction that the brake shoes 12 may be separated from the drum portion 3b against the force of the springs 13.

In the conventional elevator hoist described above, the driving motor 7, the brake device 10, etc. are exposed through the opening 1b of the case 1, so that foreign matter, such as water, oil, or dust, adheres to the driving motor 7, the brake device 10, etc., resulting in the fear of deterioration in the insulating portion, a reduction in the braking force, and damage to the apparatus.

As an example of the problem, Japanese Patent Application Laid-open No. Hei 8-40675 discloses an elevator in which the hoist is arranged in the lower portion of the hoistway. In such an elevator, it is highly possible for dust, water drops, etc. falling from the upper portion of the hoistway to enter the case 1 through the opening 1b.

Further, while one end portion 2a of themain shaft 2 is supported by the bottom portion 1c of the case 1, the other end portion 2b of the main shaft 2 is inserted into a support hole 8a of the brake support plate 8, so that it is rather difficult to line up the support hole 8a with the center of the cylindrical portion 1a.

Further, when the encoder 15 is out of order, it is necessary to detach the brake support plate 8 from the case 1; since the brake device 10 is mounted on the brake support plate 8, it is necessary to adjust the way the brake shoes 12 come into contact with the drum portion 3b after re-attaching the brake support plate 8 to the case 1, resulting in a rather low operational efficiency.

### DISCLOSURE OF THE INVENTION

This invention has been made with a view toward solving the above problems. It is an object of this invention to provide an elevator hoist which can prevent intrusion of foreign matter into the case and which allows more accurate positioning of the support hole with respect to the cylindrical portion of the case.

To this end, according to one aspect of the present invention, there is provided an elevator hoist comprising: a case having a cylindrical portion, an opening provided at one axial end of the cylindrical portion, and a bottom portion provided at the other axial end of the cylindrical portion; a main shaft whose one end is supported by the bottom portion and which extends along the axial direction of the cylindrical portion; a rotating body which is contained in the case, which has a drive sheave portion around which a main rope is wrapped and a cylindrical drum portion, and which is rotatable around the main shaft; a driving motor provided between the case and the rotating body and adapted to rotate the rotating body; a brake support plate attached to one end portion of the cylindrical portion and having a support hole into which the other end portion of the main shaft is inserted; and a brake device mounted on the brake support plate and adapted to brake rotation of the rotating body, wherein the brake support plate also serves as a cover for closing the entire opening, the brake support plate is provided with a step portion to be fit-engaged with the peripheral edge portion of the opening, and the step portion is provided so as to extend along at least a part of a circumference having the support hole as its center.

### BRIEF DESCRIPTION OF THE DRAWINGS

Fig. 1 is a front view of an elevator hoist according to Embodiment 1 of this invention;
Fig. 2 is a sectional view taken along the line II-II of Fig. 1;
Fig. 3 is an enlarged view of a main portion of Fig. 2;
Fig. 4 is a front view, partially broken away, showing an elevator hoist according to Embodiment 2 of this invention;
Fig. 5 is a front view of an elevator hoist according to Embodiment 3 of this invention;
Fig. 6 is a sectional view taken along the line VI-VI of Fig. 5;
Fig. 7 is a front view of an elevator hoist according to Embodiment 4 of this invention;
Fig. 8 is a sectional view taken along the line VIII-VIII of Fig. 7;
Fig. 9 is a front view of an example of a conventional elevator hoist; and
Fig. 10 is a side view, partially in section, showing the inner structure of the hoist of Fig. 9.

### BEST MODE FOR CARRYING OUT THE INVENTION

Preferred embodiments of this invention will now be described with reference to the drawings.

### Embodiment 1

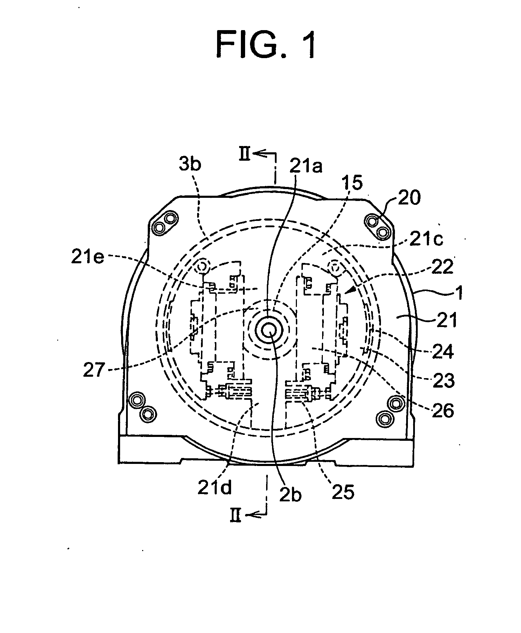

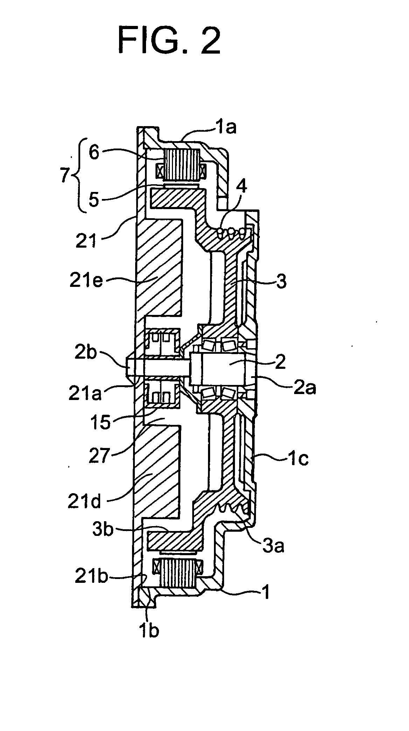

Fig. 1 is a front view of an elevator hoist according to Embodiment 1 of this invention, and Fig. 2 is a sectional view taken along the line II-II of Fig. 1.

In the drawings, a metal case 1 has a cylindrical portion 1a, an opening 1b provided at one axial end of the cylindrical portion, and a bottom portion 1c provided at the other axial end of the cylindrical portion 1a. At the bottom portion 1c, one end portion 2a of a main shaft 2 extending in the axial direction of the cylindrical portion 1a (from side to side in Fig. 2) is supported.

The case 1 contains a rotating body 3 rotatable around the main shaft 2. The rotating body 3 has a drive sheave portion 3a and a cylindrical drum portion 3b formed integrally with the drive sheave portion 3a. A plurality of main ropes 4 are wrapped around the outer peripheral portion of the drive sheave portion 3a.

An armature 5 is mounted on the outer peripheral surface of the drum portion 3b. Fixed to the inner peripheral surface of the cylindrical portion 1a is a stator winding 6 opposed to the armature 5. A driving motor 7 for rotating the rotating member 3 has the armature 5 and the stator winding 6. Mounted on the main shaft 2 is an encoder 15 for detecting the rotating speed of the rotating body 3.

A brake support plate 21 is mounted to one end portion of the cylindrical portion 1a by means of a plurality of bolts 20. The brake support plate 21 is equipped with a circular support hole 21a into which the other end portion 2b of the main shaft 2 is inserted. Further, mounted on the brake support plate 21 is a brake device 22 for braking the rotation of the rotating body 3.

The brake device 22 has a pair of rockable brake arms 23, a pair of brake shoes 24 mounted on the brake arms 23 and adapted to move toward and away from the inner peripheral surface of the drum portion 3b by the rocking of the brake arms 23, a pair of springs 25 for urging the brake arms 23 in such a direction that the brake shoes 24 may come into contact with the drum portion 3b, and a pair of electromagnet mechanisms 26 for causing the brake arms 23 to rock in such a direction that the brake shoes 24 may be separated from the drum portion 3b against the force of the springs 25.

Further, the brake support plate 21 also serves as a cover closing the entire opening 1b. The brake support plate 21 is equipped with a step portion 21b to be fit-engaged with the peripheral edge portion of the opening 1b. The step portion 21b is provided so as to extend along the entire circumference of a circle whose center is the support hole 21a. That is, the step portion 21b is provided so as to extend along a concentric circle of the support hole 12a.

Further, formed on the back surface of the brake support plate 21 (the surface opposed to the rotating body 3) are an arm support portion 21c supporting the brake arm 23 and protrusions 21d and 21e to which a spring 25 and an electromagnet mechanism 26 are mounted. Between the protrusions 21d and 21e, there is secured a place 27 for arranging the encoder 15.

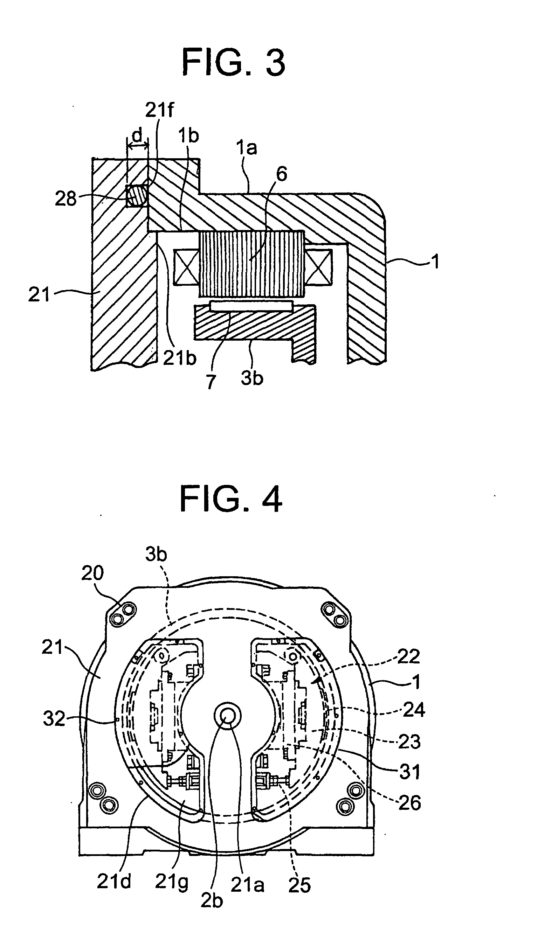

Fig. 3 is an enlarged view showing a main portion of Fig. 2. In the surface of the brake support plate 21 held in contact with the end surface of the case 1, there is provided a groove 21f so as to surround the entire periphery of the opening 1b. An O-ring 28 as an elastic member is inserted into the groove 21f. The depth of the groove 21f is smaller than the section diameter of the O-ring 28. Thus, when the brake support plate 21 is mounted to the case 1, the O-ring 28 is brought into press contact with the inner wall surface of the groove 21f and the end surface of the cylindrical portion 1a.

In this elevator hoist, the brake support plate 21 closes the entire opening 1b, so that even when it is arranged in the lower portion of a hoistway, intrusion of foreign matter into the case 1 is prevented, making it possible to prevent deterioration in insulation and deterioration in the performance of the apparatus.

Further, the step portion 21b fit-engaged with the opening 1b and the support hole 21a supporting the other end portion 2b of the main shaft 2 are provided in the brake support plate 21, and constitute concentric circles, so that it is possible to perform positioning on the support hole 21a more accurately with respect to the cylindrical portion 1a. That is, by positioning the support hole 21a at the center of the circular step portion 21b and fitting the step portion 21b into the opening 1b, it is possible to easily arrange the support hole 21a at the center of the cylindrical portion 1a, making it possible to easily perform centering on the main shaft 2.

Further, since the O-ring 28 exists between the case 1 and the brake support plate 21, it is possible to more reliably prevent intrusion of oil, water drops or the like into the case 1.

It is also possible for the step portions 21b to be provided as arcuate parts extending along a circumference having the support hole 21a as its center.

Further, while in the above-described example the groove 21f is provided in the brake support plate 21, it is also possible to provide the groove in the end surface of the cylindrical portion of the case. Further, it is also possible to provide a groove in both the brake support plate and the case.

### Embodiment 2

Next, Fig. 4 is a front view, partially broken away, showing an elevator hoist according to Embodiment 2 of this invention. In the drawing, the brake support plate 21 is provided with a pair of inspection openings 21g for performing inspection on the brake device 22, and a pair of inspection covers 31 for opening and closing the inspection openings 21g are mounted thereto.

Further, step portions 21h are provided in the peripheral edge portions of the inspection openings 21g so that the surfaces of the inspection covers 31 may be flush with the surface of the brake support plate 21. The inspection covers 31 are mounted to the brake support plate 21 by a plurality of screws 32. Otherwise, this embodiment is of the same construction as Embodiment 1.

In this elevator hoist, the inspection covers 31 are removed at the time of inspection of the brake device 22, and the inspection openings 21g are opened, whereby it is possible to easily perform inspections of the brake device 22 without removing the brake support plate 21 from the case 1, thereby facilitating inspection of the brake device 22, reducing the operation time, and achieving an improvement in operability.

Further, since the step portions 21h are provided in the peripheral edge portions of the inspection openings 21g, the inspection covers 31 do not protrude beyond the surface of the brake support plate 21, making it possible to install the hoist in a small hoistway.

### Embodiment 3

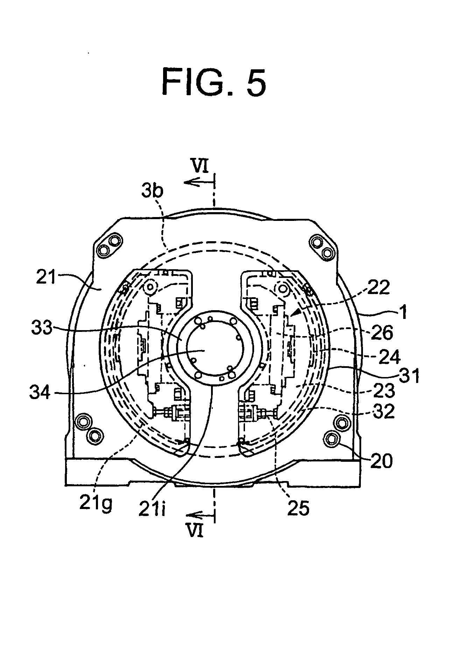

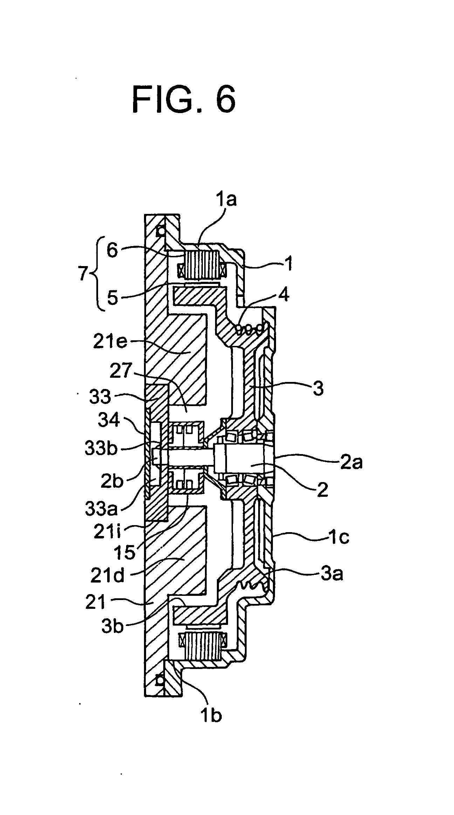

Next, Fig. 5 is a front view of an elevator hoist according to Embodiment 3 of this invention, and Fig. 6 is a sectional view taken along the line VI-VI of Fig. 5. In the drawings, the brake support plate 21 is provided with a central opening 21i for attaching and detaching the encoder 15 with respect to the main shaft 2, and a central cover 33 for opening and closing the central opening 21i is mounted thereto.

The central cover 33 is provided with a cover recess 33a. At the bottom of the cover recess 33a, there is provided a support hole 33b for supporting the other end portion 2b of the main shaft 2. Mounted to the central cover 33 is a lid 34 for closing the opening of the cover recess 33a. The surface of the central cover 33 and the surface of the lid 34 are flush with the surface of the brake support plate 21. otherwise, this embodiment is of the same construction as Embodiment 2.

In this elevator hoist, after removing the lid 34 and removing a lock nut, etc. from the other end portion 2b of the main shaft 2, the central cover 33 is removed from the brake support plate 21, whereby the central opening 21i is opened without detaching the brake support plate 21 from the case 1, making it possible to perform the operation of attaching and detaching the encoder 15 with respect to the main shaft 2 and achieving an improvement in operability.

Further, since the opening of the cover recess 33a is closed by the lid 34, it is possible to prevent foreign matter from adhering to the other end portion of the main shaft 2.

### Embodiment 4

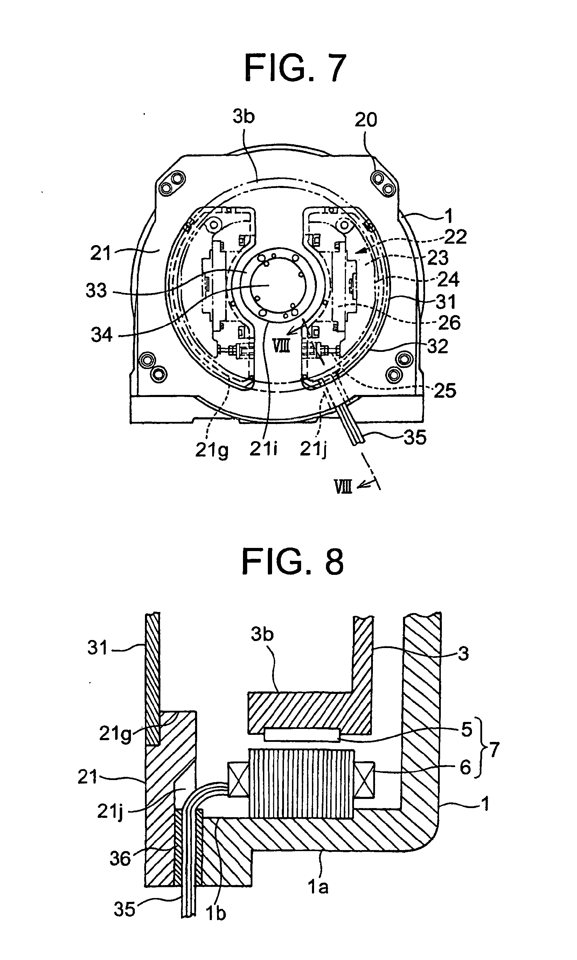

Next, Fig. 7 is a front view of an elevator hoist according to Embodiment 4 of this invention, and Fig. 8 is a sectional view taken along the line VIII-VIII of Fig. 7. In the drawings, the brake support plate 21 is provided with a groove portion 21j into which a plurality of electric wires 35 led out of the case 1 are inserted. The electric wires 35 are connected to the stator winding 6 and the electromagnet of the electromagnet mechanism 26.

Arranged in the groove portion 21j is a cylindrical protecting member (buffer member) 36 capable of undergoing elastic deformation and adapted to protect the electric wires 35 while filling the gap between the groove portion 21j and the electric wires 35. The protecting member 36 is formed, for example, of foam polystyrene or rubber. otherwise, this embodiment is of the same construction as Embodiment 3.

In this elevator hoist, the groove portion 21j is provided in the brake support plate 21, so that it is possible to lead the electric wires 35 to the exterior of the case 1 by means of a simple structure. Further, since the protecting member 36 is arranged in the groove portion 21j, damage to the electric wires 35 can be prevented.

## Claims

1. An elevator hoist comprising:
a case having a cylindrical portion, an opening provided at one axial end of the cylindrical portion, and a bottom portion provided at the other axial end of the cylindrical portion;
a main shaft whose one end is supported by the bottom portion and which extends along the axial direction of the cylindrical portion;
a rotating body which is contained in the case, which has a drive sheave portion around which a main rope is wrapped and a cylindrical drum portion, and which is rotatable around the main shaft;
a driving motor provided between the case and the rotating body and adapted to rotate the rotating body;
a brake support plate attached to one end portion of the cylindrical portion and having a support hole into which the other end portion of the main shaft is inserted; and
a brake device mounted on the brake support plate and adapted to brake rotation of the rotating body,
wherein the brake support plate also serves as a cover for closing the entire opening, the brake support plate is provided with a step portion to be fit-engaged with the peripheral edge portion of the opening, and the step portion is provided so as to extend along at least a part of a circumference having the support hole as its center.

2. An elevator hoist according to Claim 1, wherein in at least one of the contact surfaces of the case and the brake support plate, there is provided a groove so as to surround the entire periphery of the opening, an elastic member is inserted into the groove, and the elastic member is brought into press contact with the case and the brake support plate when the brake support plate is attached to the case.

3. An elevator hoist according to Claim 1, wherein the brake support plate is provided with an inspection opening for performing inspection on the brake device and has attached thereto an inspection cover for opening and closing the inspection opening.

4. An elevator hoist according to Claim 1, wherein an encoder for detecting the rotating speed of the rotating body is mounted on the main shaft, the brake support plate is provided with a central opening for attaching and detaching the encoder with respect to the main shaft and has attached thereto a central cover for opening and closing the central opening, and the central cover is provided with the support hole.

5. An elevator hoist according to Claim 4, wherein the central cover is provided with a cover recess at the bottom of which the support hole is provided, and a lid for closing the opening of the cover recess is mounted to the central cover.

6. An elevator hoist according to Claim 1, wherein the brake support plate is provided with a groove portion into which an electric wire led out to the exterior of the case is inserted.

7. An elevator hoist according to Claim 6, wherein arranged in the groove portion is an elastically deformable protecting member adapted to protect the electric wire while filling the gap between the groove portion and the electric wire.
